# EUROPEAN PATENT APPLICATION

(11) **EP 4 629 407 A1**
(43) Date of publication of application: **08.10.2025**
(21) Application number: 23897715.1
(22) Date of filing: 27.11.2023
(51) Int. Cl.: H01M 50/126, H01G 11/78, H01M 50/121, H01M 50/131

(54) **HOUSING MATERIAL FOR POWER STORAGE DEVICE, AND POWER STORAGE DEVICE**

(30) Priority: 29.11.2022 JP 2022189956
(71) Applicant: Toppan Holdings Inc., Tokyo 110-0016 (JP)
(72) Inventor: IMAMOTO, Junya, Tokyo 110-0016 (JP)
(74) Representative: Hoffmann Eitle
(86) International application number: PCT/JP2023/042315
(87) International publication number: WO 2024/117067

(57) **Abstract**

A power storage device packaging material is used for a power storage device. The power storage device packaging material at least contains a substrate layer; a barrier layer; and a sealant layer in this order, wherein the sealant layer has an oxygen transmission rate at 100°C of 1.0×10⁻¹⁵ to 1.0×10⁻¹³[(mol·m)/(m²·s·Pa)].

## Description

### [Technical Field]

The present disclosure relates to power storage device packaging materials and power storage devices.

### [Background Art]

Known power storage devices include secondary batteries such as lithium-ion batteries, nickel hydride batteries and lead batteries, and electrochemical capacitors such as electric double layer capacitors. Due to miniaturization of mobile devices, limitation of installation spaces, or the like, power storage devices are required to be further miniaturized, and thus attention is being given to lithium-ion batteries for their high energy density. Metal cans that have been used for packaging materials for lithium-ion batteries are being replaced by multi-layer films due to their light weight, high heat dissipation, and low manufacturing cost.

Lithium-ion batteries using such a multi-layer film as a packaging material are called laminated lithium-ion batteries. A laminated lithium-ion battery includes a power storage element having a positive electrode, a liquid electrolyte and a negative electrode, and a packaging bag that accommodates the power storage element and prevents moisture from entering the battery. The packaging bag has a packaging material, and the packaging material includes a substrate layer, a barrier layer and a sealant layer in this order. The packaging material covers the power storage element with the sealant layer inside and the substrate layer outside. Laminated lithium-ion batteries may be produced by, for example, forming a recess in part of the packaging material by cold forming, accommodating the power storage element in the recess, folding back the remaining part of the packaging material, and sealing the edge portions by heat-sealing (see, e.g., PTL 1).

### [Citation List]

### [Patent Literature]

PTL 1: JP 2013-101765 A

### [Summary of Invention]

### [Technical Problem]

Meanwhile, research and development of power storage devices called solid-state batteries is being made to replace lithium-ion batteries as next generation batteries. In operation of a solid-state battery, the solid-state battery is restrained and the power storage element is pressurized via the packaging material in order to increase the conductivity in the power storage element. For efficient operation of the solid-state battery, it is necessary to apply pressure uniformly to the power storage element.

However, in the battery production process, the sealant layer may be scratched in the transport direction when the packaging material is transported in rolls. If the sealant layer has such scratches, pressure may not be uniformly applied to the pressurized surface of the power storage element, reducing the operational efficiency of the battery.

In power storage devices other than solid-state batteries, it is also desired for the sealant layer not to be scratched from the perspective of improving the performance of the power storage device.

Therefore, there is a demand for power storage device packaging materials capable of having excellent scratch resistance.

In view of the above issue, the present disclosure has been made to provide a power storage device packaging material and a power storage device capable of having excellent scratch resistance.

### [Solution to Problem]

The inventors of the present disclosure have conducted diligent research to solve the above problem and unexpectedly found that the scratch resistance of a packaging material can be improved by setting the oxygen transmission rate of a sealant layer within a specific range, which led to the present disclosure.

That is, an aspect of the present disclosure is to provide a power storage device packaging material for a power storage device, including: a substrate layer; a barrier layer; and a sealant layer in this order, wherein the sealant layer has an oxygen transmission rate at 100°C of 1.0×10⁻¹⁵ to 1.0×10⁻¹³ [(mol·m)/(m²·s·Pa)].

The above packaging material is capable of having excellent scratch resistance.

The inventors of the present disclosure consider the reason why the above effects are achieved to be as follows.

That is, first, a sealant layer having many amorphous regions is more permeable to oxygen, and a sealant layer having few amorphous regions is less permeable to oxygen. Accordingly, a sealant layer with high crystallinity (few amorphous regions) is less permeable to oxygen and thus is a hard sealant layer, whereas a sealant layer having low crystallinity (many amorphous regions) is more permeable to oxygen and thus is a soft sealant layer.

Therefore, if the oxygen transmission rate of the sealant layer is too high, when the packaging material is transported in rolls and stress is applied from the rolls to the sealant layer, the stress applied from the rolls to the barrier layer is easily transmitted to the inside of the sealant layer since the sealant layer is soft. However, since the stress rebounds from the barrier layer-side and cancels the stress applied from the rolls, the overall stress is less likely to be applied to the inside of the sealant layer. As a result, the stress applied from the rolls to the barrier layer is difficult to mitigate inside the sealant layer, and is concentrated on the roll-side surface of the sealant layer, causing the surface of the sealant layer to be more susceptible to damage.

On the other hand, if the oxygen transmission rate of the sealant layer is too low, when the packaging material is transported in rolls and stress is applied from the rolls to the sealant layer, the stress applied from the rolls to the barrier layer is not easily transmitted to the inside of the sealant layer since the sealant layer is hard. As a result, the stress applied from the rolls to the barrier layer is difficult to mitigate, and is concentrated on the roll-side surface of the sealant layer, causing the surface of the sealant layer to be more susceptible to damage.

In the packaging material of the present disclosure, however, the oxygen transmission rate of the sealant layer is within an appropriate range, and the sealant layer is neither too soft nor too hard, so that the stress applied from the rolls to the barrier layer is appropriately transmitted to the inside of the sealant layer, suppressing the concentration of stress on the surface of the sealant layer. That is, the stress applied from the rolls to the barrier layer is appropriately mitigated. As a result, the surface of the sealant layer is less susceptible to damage, providing the packaging material with excellent scratch resistance.

In the above power storage device packaging material, the sealant layer may contain a base resin (A) made of a polypropylene-based resin, the polypropylene-based resin may contain at least one of homo polypropylene and block polypropylene, and the polypropylene-based resin may have a crystallization temperature of 100°C to 120°C and a melting temperature of 155°C to 168°C.

In this packaging material, when the polypropylene-based resin contained in the base resin contains at least one of homo polypropylene and block polypropylene, and the polypropylene-based resin has a crystallization temperature of 100°C to 120°C and a melting temperature of 155°C to 168°C, the packaging material can be sufficiently hard, and the scratch resistance of the packaging material can be further improved compared to when the polypropulene is formed only of random polypropylene or when the crystallization temperature or the melting temperature of the polypropylene-based resin is outside the above range.

In the above power storage device packaging material, the sealant layer may contain a base resin (A) made of a polypropylene-based resin, and the polypropylene-based resin may contain a first polypropylene-based resin having an MFR of 15 g/10 min to 40 g/10 min and a second polypropylene-based resin having an MFR of 1 g/10 min to 10 g/10 min.

The first polypropylene-based resin having a high MFR tends to be relatively hard since the molecules move easily and crystallization proceeds easily, whereas the second polypropylene-based resin having a low MFR tends to be relatively soft since crystallization does not proceed easily. Therefore, when the polypropylene-based resin contains the first polypropylene-based resin having a high MFR and the second polypropylene-based resin having a low MFR, appropriate stress relaxation properties can be imparted to the sealant layer to thereby provide the packaging material with further improved scratch resistance.

In the above power storage device packaging material, the sealant layer may contain a base resin (A) made of a polypropylene-based resin and an additive (B), the additive (B) may contain a component having a crystallization temperature of 50°C to 90°C and a melting temperature of 50°C to 120°C, and the component may contain at least one of a miscible elastomer component (B 1) that is miscible with the base resin (A), an immiscible elastomer component (B2) that is immiscible with the base resin (A), a block copolymer or a graft copolymer (B3) of polypropylene and polyethylene, and a block copolymer (B4) of polyethylene and polyethylene butylene.

With this configuration, when the sealant layer contains the above additive in addition to the base resin, stress relaxation properties can be effectively imparted to the sealant layer to thereby provide the packaging material with further improved scratch resistance.

In the above power storage device packaging material, the component may contain the immiscible elastomer component (B2), the block copolymer (B3) of polypropylene and polyethylene, or the block copolymer (B4) of polyethylene and polyethylene butylene, and the immiscible elastomer component (B2) may be a polyethylene-based elastomer component.

When the additive contains the above components, stress relaxation properties are effectively imparted to the sealant layer, and the dispersibility of the additive is further improved. This results in further improvement in scratch resistance of the packaging material.

In the above power storage device packaging material, a content of the additive (B) in the sealant layer may be 2.5 mass% or greater.

With this configuration, the scratch resistance of the packaging material is further improved.

In the power storage device packaging material, a content of the additive (B) in the sealant layer may be less than 50 mass%.

With this configuration, the scratch resistance of the packaging material is further improved.

The above power storage device packaging material may further include an adhesive resin layer that bonds the barrier layer to the sealant layer.

In the above power storage device packaging material, the adhesive resin layer may have an oxygen transmission rate at 100°C of 1.0×10⁻¹⁵ to 1.0×10⁻¹³ [(mol·m)/(m²·s·Pa)].

With this configuration, the scratch resistance of the packaging material is further improved.

In the above power storage device packaging material, the adhesive resin layer may contain an acid-modified polyolefin resin.

With this configuration, the adhesion between the barrier layer and the sealant layer is likely to be improved.

In the above power storage device packaging material, the power storage device may be a solid-state battery.

Since the power storage device packaging material described above can have excellent scratch resistance, irregularities are less likely to be formed on the surface of the sealant layer. Accordingly, when the power storage device packaging material is used as a packaging material for a solid-state battery having a power storage element and the power storage element is subjected to pressure via the packaging material, the presence of areas of high pressure and areas of low pressure on the pressurized surface of the power storage element is suppressed, and pressurization on the pressurized surface of the power storage element can be uniform. As a result, the solid-state battery as a power storage device can be efficiently operated.

Another aspect of the present disclosure is to provide a power storage device including: a power storage element; and a packaging bag that accommodates the power storage element, wherein the packaging bag has the above-mentioned packaging material.

According to the above power storage device, the above power storage device packaging material can have excellent scratch resistance, so that irregularities are less likely to be formed on the surface of the sealant layer. Accordingly, when the power storage device packaging material is used as a packaging material for a power storage device having a power storage element and the power storage element is subjected to pressure via the packaging material, the presence of areas of high pressure and areas of low pressure on the pressurized surface of the power storage element is suppressed, and pressurization on the pressurized surface of the power storage element can be uniform. This results in improvement in performance of the power storage device.

The above power storage device may be a solid-state battery.

With this configuration, the pressurized surface of the power storage element can be uniformly pressurized, so that the solid-state battery as a power storage device can be efficiently operated.

### [Advantageous Effects of Invention]

According to the present disclosure, a power storage device packaging material and a power storage device capable of having excellent scratch resistance are provided.

### [Brief Description of Drawings]

Fig. 1 is a schematic cross-sectional view of a packaging material according to an embodiment of the present disclosure.
Fig. 2 is a schematic cross-sectional view of a modified example of the packaging material of Fig. 1.
Fig. 3 is a perspective view illustrating a power storage device according to an embodiment of the present disclosure.

### [Description of Embodiments]

With reference to the drawings, a preferred embodiment of the present disclosure will be specifically described. Throughout the drawings, the same or corresponding components are denoted by the same reference signs, and repeated description is omitted. Further, the dimensional ratios of the drawings are not limited to those shown in the drawings.

### [Power Storage Device Packaging Material]

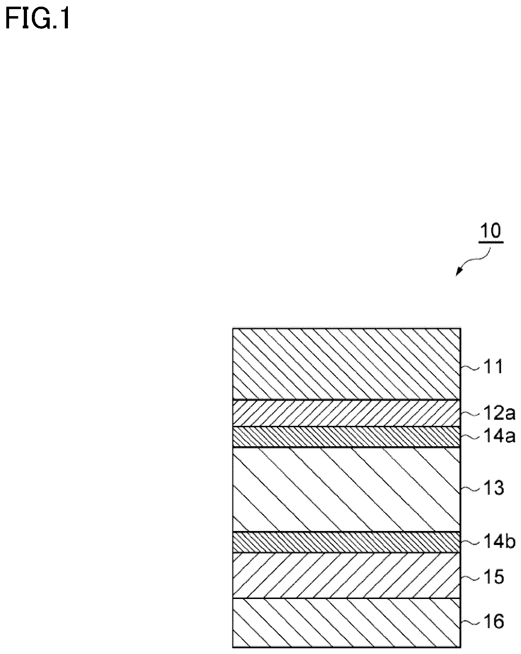

Fig. 1 is a schematic cross-sectional view of a power storage device packaging material according to an embodiment of the present disclosure. As shown in Fig. 1, a power storage device packaging material of the present embodiment (hereinafter, also simply referred to as a "packaging material") 10 is a packaging material for a power storage device, and includes a substrate layer 11, a first adhesive layer 12a, a barrier layer 13, an adhesive resin layer 15 and a sealant layer 16, in this order. The oxygen transmission rate of the sealant layer 16 at 100°C is 1.0×10⁻¹⁵ to 1.0×10⁻¹³ [(mol·m)/(m²·s·Pa)].

The packaging material 10 can have excellent scratch resistance.

The barrier layer 13 is provided with a first anticorrosion treatment layer 14a on a side facing the substrate layer 11, and a second anticorrosion treatment layer 14b on a side facing the sealant layer 16. In the packaging material 10, the substrate layer 11 is the outermost layer and the sealant layer 16 is the innermost layer. In other words, the packaging material 10 is used with the substrate layer 11 being on the outside of the power storage device and the sealant layer 16 being on the inside of the power storage device.

In the following description, each of layers constituting the packaging material 10 will be specifically described.

### <Substrate Layer>

The substrate layer 11 imparts heat resistance to the packaging material 10 in the step of sealing a packaging bag during production of the power storage device, and prevents pinholes from occurring during forming processing or distribution of the packaging material 10. Particularly in the case of a packaging material for large power storage devices, the substrate layer 11 can also impart scratch resistance, chemical resistance, insulating properties, and the like.

The substrate layer 11 is preferably a layer formed of an insulating resin. Examples of the resin include polyester resins, polyamide resins, polyimide resins, polyamideimide resins, polyether ketone resins, polyphenylene sulfide resins, polyetherimide resins, polysulfone resins, fluororesins, phenol resins, melamine resins, urethane resins, allyl resins, silicon resins, epoxy resins, furan resins and acetyl cellulose resins.

Among these resins, polyester resins and polyamide resins are preferred for the substrate layer 11 from the perspective of having excellent formability.

Examples of the polyester resins include polyethylene terephthalate, polybutylene terephthalate and polyethylene naphthalate.

Examples of the polyamide resins include nylon-6, nylon-6,6, copolymers of nylon-6 and nylon-6,6, nylon-6, nylon-9T, nylon-10, polymetaxylylene adipamide (MXD6), nylon-11 and nylon-12.

The substrate layer 11 may be in the form of a stretched or unstretched film, or in the form of a coating film.

Further, the substrate layer 11 may be a single layer or multilayer, and when the substrate layer 11 is a multilayer, it is formed by laminating layers made of different resins. When the substrate layer 11 is in the form of a film, it can be formed by coextruding layers or laminating layers via an adhesive. When the substrate layer 11 is a coating film, it can be formed by applying a coating film-forming composition multiple times. The substrate layer 11 may also be a multilayer, which can be formed by combining a film and a coating film.

When the above-mentioned resins are used in the form of a film, the substrate layer 11 is preferably a biaxially stretched film. In this case, the packaging material 10 has good formability. Examples of stretching methods used to obtain a biaxially stretched film include sequential biaxial stretching, tubular biaxial stretching, simultaneous biaxial stretching, and the like. From the perspective of obtaining better deep drawing formability, a biaxially stretched film is preferably stretched by tubular biaxial stretching.

The substrate layer 11 preferably has a thickness of 6 µm to 100 µm, more preferably 10 µm to 75 µm, even more preferably 10 µm to 50 µm. The substrate layer 11 having a thickness of 6 µm or greater tends to improve pinhole resistance and insulation properties of the packaging material 10. The substrate layer 11 having a thickness of 100 µm or less can reduce the total thickness of the packaging material 10.

Preferably, the substrate layer 11 has a melting temperature higher than that of the sealant layer 16. When the sealant layer 16 has a multilayer structure, the melting temperature of the sealant layer 16 refers to the melting temperature of the layer having a maximum melting temperature. The substrate layer 11 having a melting temperature higher than the melting temperature of the sealant layer 16 can prevent the appearance of the packaging material 10 from being deteriorated due to melting of the substrate layer 11 (outer layer) during heat-sealing.

The melting temperature of the substrate layer 11 is preferably 290°C or higher. However, the melting temperature of the substrate layer 11 is preferably 350°C or lower. Examples of the resin film that can be used as the substrate layer 11 and has a melting temperature within the above range include nylon films, polyester films such as PET films, polyamide films, polyphenylene sulfide films (PPS films), and the like. The substrate layer 11 may be a commercially available film, or may be a coating film (obtained by applying and drying a coating liquid).

The substrate layer 11 may be formed by applying a thermosetting resin.

Further, the substrate layer 11 may contain various additives (e.g., flame retardants, slip agents, anti-blocking agents, antioxidants, photostabilizers and tackifiers).

A difference ΔT (= T₁₁-T₁₆) between the melting temperature T₁₁ of the substrate layer 11 and the melting temperature T₁₆ of the sealant layer 16 is preferably 20°C or more, more preferably 30°C or more, and particularly preferably 50°C or more. When the temperature difference is 20°C or more, deterioration in appearance of the packaging material 10 due to heat-sealing can be more sufficiently prevented.

ΔT (= T₁₁-T₁₆) may be preferably 300°C or less, more preferably 200°C or less, and particularly preferably 100°C or less.

### <First Adhesive Layer 12a>

The first adhesive layer 12a bonds the substrate layer 11 to the barrier layer 13. Specific examples of the materials used for constituting the first adhesive layer 12a include a polyurethane resin prepared by reacting a main resin such as a polyester polyol, polyether polyol, acrylic polyol or carbonate polyol with a bifunctional or higher functional isocyanate compound (polyfunctional isocyanate compound) as a curing agent. These various polyols can be used singly or in combination of two or more, according to the functions and performance sought in the packaging material 10. Further, in addition to the above, the first adhesive layer 12a can also be made of an epoxy resin as a main resin with a curing agent.

The first adhesive layer 12a is formed using the adhesive composition containing the above-mentioned base resin and curing agent. Moreover, depending on the performance required for the adhesive, the first adhesive layer 12a may be formed by adding other various additives or stabilizers to the above adhesive composition.

The adhesive composition preferably contains, as the curing agent, at least one polyfunctional isocyanate compound selected from the group consisting of an alicyclic isocyanate polymer and an isocyanate polymer containing an aromatic ring in the molecular structure. Examples of the polyfunctional isocyanate compound include an isocyanurate of isophorone diisocyanate, an adduct of tolylene diisocyanate, an adduct of hexamethylene diisocyanate, a biuret and an isocyanurate of hexamethylene diisocyanate, a biuret and an isocyanurate of tolylene diisocyanate, an adduct, a biuret and an isocyanurate of diphenylmethane diisocyanate, and an adduct, a biuret and an isocyanurate of xylylene diisocyanate.

As the curing agent, an alicyclic isocyanate polymer and an isocyanate polymer containing an aromatic ring in the molecular structure may be used in combination. The combined use of these tends to further improve heat resistance.

The adhesive composition preferably contains at least one polyol selected from the group consisting of polyester polyols, acrylic polyols and polycarbonate diols from the perspective of further improving heat resistance. Among these, polyester polyols are more preferred from the perspective of still further improving heat resistance.

In the adhesive composition, a ratio (NCO/OH) of the number of isocyanate groups contained in the polyfunctional isocyanate compound to the number of hydroxyl groups contained in the polyol may be 1.5 to 40.0, and preferably 15.0 to 30.0. The ratio of 1.5 or greater causes the curing agents to react with each other, whereby by-products such as urea resin and biuret resin are more likely to form. These by-products contain active hydrogen groups, which interact with polar groups in adjacent layers, further improving the interfacial adhesion between the first adhesive layer 12a and the substrate layer 11 and between the first adhesive layer 12a and the barrier layer 13. Therefore, the packaging material 10 tends to have improved heat resistance. On the other hand, the ratio of 40.0 or less can further improve lamination strength of the packaging material 10 in a room temperature environment and a high temperature environment.

The thickness of the first adhesive layer 12a is not specifically limited, but is preferably 1 µm to 10 µm, and more preferably 2 µm to 7 µm from the perspective of obtaining desired adhesive strength, conformability, processability, and the like.

The mass per unit area of the first adhesive layer 12a may be 2.0 g/m² to 6.0 g/m², preferably 2.5 g/m² to 5.0 g/m², and more preferably 3.0 g/m² to 4.0 g/m² from the perspective of ensuring further improved lamination strength both in a room temperature environment and a high temperature environment, and obtaining further improved deep drawing formability.

### <Barrier Layer>

The barrier layer 13 has water vapor barrier properties to prevent moisture from infiltrating into the power storage device. Further, the barrier layer 13 may have ductility and malleability for deep drawing.

The barrier layer 13 can be made of, for example, various metal foils such as aluminum, stainless steel and copper, or a metal vapor deposition film, an inorganic oxide vapor deposition film, a carbon-containing inorganic oxide vapor deposition film, or a film having these vapor deposition films.

Examples of the film having a vapor deposition film include an aluminum vapor deposition film and an inorganic oxide vapor deposition film. These can be used singly or in combination of two or more.

The barrier layer 13 is preferably made of a metal foil, and more preferably made of an aluminum foil or a stainless steel from the viewpoint of the weight (specific gravity), barrier properties such as moisture resistance, processability and cost.

Further, the aluminum foil may be preferably an annealed soft aluminum foil from the perspective of imparting desired ductility and malleability during forming. It is more preferred to use an aluminum foil containing iron for the purposes of further imparting pinhole resistance and ductility and malleability during forming.

The iron content in the aluminum foil is preferably 0.1 mass% to 9.0 mass%, and more preferably 0.5 mass% to 2.0 mass% relative to the 100 mass% of the aluminum foil. The iron content of 0.1 mass% or greater can further improve pinhole resistance, ductility and malleability of a packaging material 10. The iron content of 9.0 mass% or less can improve flexibility of a packaging material 10.

Although an untreated aluminum foil may also be used as the aluminum foil, an aluminum foil subjected to a degreasing treatment is preferably used from the perspective of imparting corrosion resistance.

When degreasing the aluminum foil, only one surface of the aluminum foil may be degreased, or both surfaces may be degreased.

The thickness of the barrier layer 13 is not specifically limited, but is preferably 9 µm to 200 µm, and more preferably 15 µm to 100 µm, from the viewpoint of barrier properties, pinhole resistance and processability.

### <First and Second Anticorrosion Treatment Layers>

The first and second anticorrosion treatment layers 14a and 14b are provided to prevent corrosion of the metal foil (metal foil layer) or the like constituting the barrier layer 13. The first anticorrosion treatment layer 14a enhances adhesion between the barrier layer 13 and the first adhesive layer 12a. Further, the second anticorrosion treatment layer 14b enhances adhesion between the barrier layer 13 and the adhesive resin layer 15.

The first and second anticorrosion treatment layers 14a and 14b may have the same configuration or different configurations.

The first and second anticorrosion treatment layers 14a and 14b (hereinafter, also simply referred to as "anticorrosion treatment layers 14a and 14b") may be formed by, for example, degreasing treatment, hydrothermal modification treatment, anodic oxidation treatment, chemical conversion treatment, or a combination of these treatments.

Examples of the degreasing treatment include acid degreasing or alkaline degreasing.

The acid degreasing may be a method using an inorganic acid such as sulfuric acid, nitric acid, hydrochloric acid or hydrofluoric acid alone or in a mixture. Further, the acid degreasing is preferably performed using an acid degreasing agent obtained by dissolving a fluorine-containing compound, such as monosodium ammonium difluoride, in the above inorganic acid. **In** this case, particularly when an aluminum foil is used as the barrier layer 13, the effect of degreasing aluminum is obtained. Further, the acid degreasing agent can form a fluoride of aluminum in a passive state, which is advantageous in terms of corrosion resistance.

The alkaline degreasing may be a method using sodium hydroxide or the like.

Examples of the hydrothermal modification treatment include a boehmite treatment in which an aluminum foil is immersed in boiling water to which triethanolamine has been added.

Examples of the anodic oxidation treatment include an alumite treatment.

Examples of the chemical conversion treatment include an immersion type chemical conversion treatment and a coating type chemical conversion treatment.

The immersion type chemical conversion treatment may be, for example, chromate treatment, zirconium treatment, titanium treatment, vanadium treatment, molybdenum treatment, calcium phosphate treatment, strontium hydroxide treatment, cerium treatment, ruthenium treatment, or various chemical conversion treatments of mixed phases thereof.

On the other hand, the coating type chemical conversion treatment may be a method of applying a coating agent having an anticorrosion performance to the barrier layer 13.

Of these anticorrosion treatments, when any of the hydrothermal modification treatment, anodic oxidation treatment and chemical conversion treatment is used to form at least part of the anticorrosion treatment layer, the degreasing treatment described above is preferably performed in advance. Further, when a degreased metal foil such as an annealed metal foil is used as the barrier layer 13, it is not necessary to perform degreasing treatment again in forming the anticorrosion treatment layers 14a and 14b.

The coating agent used for the coating type chemical conversion treatment preferably contains trivalent chromium. Further, the coating agent may contain at least one polymer selected from the group consisting of a cationic polymer and an anionic polymer described later.

Of the treatments mentioned above, the hydrothermal modification treatment and the anodic oxidation treatment, in particular, dissolve the surface of an aluminum foil with a treatment agent and form an aluminum compound having good corrosion resistance (such as boehmite or alumite). Therefore, since a co-continuous structure is formed from the barrier layer 13 made of an aluminum foil to the anticorrosion treatment layers 14a and 14b, the above treatments are included in the definition of the chemical conversion treatment.

Alternatively, the anticorrosion treatment layers 14a and 14b can also be formed by only a pure coating method, as described below, which is not included in the definition of the chemical conversion treatment. This coating method may use, for example, a rare-earth oxide sol such as cerium oxide with a mean particle size of 100 nm or less as a material having an anticorrosion effect (inhibitor effect) for aluminum and preferable in terms of environmental aspects. Use of this method makes it possible to impart an anticorrosion effect to a metal foil such as an aluminum foil even when using an ordinary coating method.

Examples of the rare-earth oxide sol include sols using various solvents such as an aqueous solvent, an alcohol-based solvent, a hydrocarbon-based solvent, a ketone-based solvent, an ester-based solvent, an ether-based solvent, and the like. Among these, an aqueous sol (sol using an aqueous solvent) is preferred.

To stabilize dispersion, the rare-earth oxide sol may contain, as a dispersion stabilizer, an inorganic acid such as nitric acid, hydrochloric acid, phosphoric acid, or the like or a salt thereof, or an organic acid such as acetic acid, malic acid, ascorbic acid, lactic acid, or the like. Among these dispersion stabilizers, phosphoric acid in particular is expected to provide the following effects (1) to (4) in the packaging material 10.
(1) Stabilizing dispersion of sol
(2) Improving adhesion to the barrier layer 13 by using the aluminum chelating ability of phosphoric acid
(3) Imparting corrosion resistance by capturing aluminum ions (passivation)
(4) Improving cohesive force of anticorrosion treatment layers (oxide layers) 14a and 14b by readily inducing dehydration condensation of phosphoric acid even at low temperature

Since the anticorrosion treatment layers 14a and 14b formed of the rare-earth oxide sol are aggregates of inorganic particles, the cohesive force of these layers may be lowered even after being dry-cured. Therefore, the anticorrosion treatment layers 14a and 14b in this case are preferably compounded with an anionic polymer or a cationic polymer in order to supplement the cohesive force.

The anticorrosion treatment layers 14a and 14b are not limited to the layers described above. For example, the anticorrosion treatment layers may be formed using a treatment agent prepared by blending phosphoric acid and a chromium compound with a resin binder (such as aminophenol) as in a coating-type chromate based on known art. When this treatment agent is used, the resultant layer will have both the anticorrosion function and adhesion. Although it is necessary to consider stability of a coating solution, a layer having both the anticorrosion function and adhesion can be formed using a single-component coating agent prepared in advance by mixing a rare-earth oxide sol with a polycationic polymer or a polyanionic polymer.

Regardless of having a multilayer structure or a monolayer structure, the anticorrosion treatment layers 14a and 14b preferably have mass per unit area of 0.005 g/m² to 0.200 g/m², and more preferably 0.010 g/m² to 0.100 g/m². When the mass per unit area is 0.005 g/m² or greater, the anticorrosion function can be readily imparted to the barrier layer 13. Even if the mass per unit area exceeds 0.200 g/m², there is little change in the anticorrosion function. On the other hand, if a rare-earth oxide sol is used and the coating film is thick, heat-curing during drying may be insufficient, decreasing the cohesive force. The thickness of the anticorrosion treatment layers 14a and 14b can be calculated from their specific gravity.

From the perspective of enhancing adhesion between the sealant layer 16 and the barrier layer 13, the anticorrosion treatment layers 14a and 14b may contain, for example, cerium oxide, 1 to 100 parts by mass of phosphoric acid or phosphate relative to 100 parts by mass of the cerium oxide, and a cationic polymer, or may be formed by applying a chemical conversion treatment to the barrier layer 13, or may contain a cationic polymer and be formed by applying a chemical conversion treatment to the barrier layer 13.

### <Sealant Layer>

The sealant layer 16 imparts sealing properties to the packaging material 10 due to heat-sealing, and is located on the inside of the power storage device and heat sealed when the power storage device is assembled.

The oxygen transmission rate of the sealant layer 16 at 100°C may be 1.0×10⁻¹⁵ to 1.0×10⁻¹³ [(mol·m)/(m²·s·Pa)].

The oxygen transmission rate of the sealant layer 16 at 100°C is preferably 7.0×10⁻¹⁵ to 5.0×10⁻¹⁴ [(mol·m)/(m²·s·Pa)], and more preferably 9.0×10⁻¹⁵ to 3.0×10⁻¹⁴ [(mol·m)/(m²·s·Pa)].

The oxygen transmission rate of 7.0×10⁻¹⁵ [(mol·m)/(m²·s·Pa)] or greater makes the sealant layer 16 relatively hard, and accordingly, when the packaging material 10 is transported in rolls and stress is applied from the rolls to the sealant layer 16, the stress from the rolls to the barrier layer 13 is suppressed from rebounding from the barrier layer 13. This makes it easier to mitigate the stress from the rolls to the barrier layer 13, causing the surface of the sealant layer 16 to be less susceptible to damage. On the other hand, the oxygen transmission rate of 5.0×10⁻¹⁴ [(mol·m)/(m²·s·Pa)] or less makes the sealant layer 16 relatively soft, and accordingly, when the packaging material 10 is transported in rolls and stress is applied from the rolls to the sealant layer 16, the stress from the rolls to the barrier layer 13 is easily mitigated, causing the surface of the sealant layer 16 to be less susceptible to damage.

The sealant layer 16 contains a base resin (A) made of a polypropylene-based resin. The sealant layer 16 may further contain an additive (B), or may not necessarily contain an additive (B).

The polypropylene-based resin is a resin obtained from a polymerized monomer containing propylene. Examples of the polypropylene-based resin include homo polypropylene, block polypropylene and random polypropylene. These may be used singly or in combination of two or more. The polypropylene-based resin preferably contains at least one of homo polypropylene and block polypropylene. When the polypropylene contains at least one of homo polypropylene and block polypropylene, the packaging material 10 can be sufficiently hard, and the scratch resistance of the packaging material 10 is further improved compared to when the polypropulene is formed only of random polypropylene. Preferably, the polypropylene-based resin contains block polypropylene.

The crystallization temperature of the polypropylene-based resin is not specifically limited, but is preferably 100°C to 120°C.

**In** this case, the packaging material 10 can be sufficiently hard, and the scratch resistance of the packaging material 10 is further improved compared to when the crystallization temperature of the polypropulene-based resin is outside the above range. From the perspective of further improving the scratch resistance of the packaging material 10, the crystallization temperature of the polypropylene-based resin is preferably 102°C to 120°C, and more preferably 105°C to 115°C.

The melting temperature of the polypropylene-based resin is not specifically limited, but is preferably 155°C to 168°C.

In this case, the packaging material 10 can be sufficiently hard, and the scratch resistance of the packaging material 10 is further improved compared to when the melting temperature of the polypropulene-based resin is outside the above range. From the perspective of further improving the scratch resistance of the packaging material 10, the melting temperature of the polypropylene-based resin is preferably 157°C to 167°C, and more preferably 160°C to 166°C.

The melting temperature-crystallization temperature is not specifically limited, and may be, for example, 30°C to 70°C. The melting temperature-crystallization temperature is preferably 40°C to 65°C, and more preferably 50°C to 60°C. In this case, the sealant layer 16 exhibits a good balance of hardness and softness.

The polypropylene-based resin preferably contains a first polypropylene-based resin having an MFR of 15 g/10 min to 40 g/10 min and a second polypropylene-based resin having an MFR of 1 g/10 min to 10 g/10 min.

The first polypropylene-based resin having a high MFR tends to be relatively hard since the molecules move easily and crystallization proceeds easily, whereas the second polypropylene-based resin having a low MFR tends to be relatively soft since crystallization does not proceed easily. Therefore, when the polypropylene-based resin contains the first polypropylene-based resin having a high MFR and the second polypropylene-based resin having a low MFR, appropriate stress relaxation properties can be imparted to the sealant layer 16 to thereby provide the packaging material 10 with further improved scratch resistance.

The MFR of the first polypropylene-based resin is preferably 20 g/10 min to 35 g/10 min, and more preferably 23 g/10 min to 30 g/10 min.

The MFR of the second polypropylene-based resin is preferably 2 g/10 min to 8 g/10 min, and more preferably 3 g/10 min to 5 g/10 min.

The ratio R of the MFR of the first polypropylene-based resin to the MFR of the second polypropylene-based resin is preferably greater than 0.

In this case, the sealant layer 16 is relatively hard, and when the packaging material 10 is transported in rolls and stress is applied from the rolls to the sealant layer 16, the stress from the rolls to the barrier layer 13 is suppressed from rebounding from the barrier layer 13. This makes it easier to mitigate the stress from the rolls to the barrier layer 13, causing the surface of the sealant layer 16 to be less susceptible to damage.

The ratio R of the MFR is preferably 3 or greater, and more preferably 5 or greater.

Preferably, the ratio R of the MFR is 5 or greater. In this case, the sealant layer 16 is relatively soft, and when the packaging material 10 is transported in rolls and stress is applied from the rolls to the sealant layer 16, the stress from the rolls to the barrier layer 13 is easily mitigated, causing the surface of the sealant layer 16 to be less susceptible to damage.

The ratio R of the MFR is preferably 20 or less, and more preferably 15 or less.

The additive (B) is not specifically limited, but preferably contains a component having a crystallization temperature of 50°C to 90°C and a melting temperature of 50°C to 120°C.

When the above component has a crystallization temperature and a melting temperature of 50°C or higher, the sealant layer 16 can have appropriate softness, and therefore, when the packaging material 10 is transported in rolls and stress is applied from the rolls to the sealant layer 16, the stress from the rolls to the barrier layer 13 is easily mitigated, causing the surface of the sealant layer 16 to be less susceptible to damage. When the above component has a crystallization temperature of 90°C or less or a melting temperature of 120°C or less, the sealant layer 16 is relatively hard, and when the packaging material 10 is transported in rolls and stress is applied from the rolls to the sealant layer 16, the stress from the rolls to the barrier layer 13 is suppressed from rebounding from the barrier layer 13. This makes it easier to mitigate the stress from the rolls to the barrier layer 13, causing the surface of the sealant layer 16 to be less susceptible to damage.

From the perspective of further improving the scratch resistance of the packaging material 10, the crystallization temperature of the above component is preferably 55°C to 85°C, and more preferably 60°C to 80°C.

From the perspective of further improving the scratch resistance of the packaging material 10, the melting temperature of the above component is preferably 55°C to 115°C, and more preferably 65°C to 110°C.

The additive (B) is not specifically limited, but preferably contains a component having a crystallization temperature of 50°C to 90°C and a melting temperature of 50°C to 120°C.

The melting temperature-crystallization temperature is not specifically limited, but from the perspective of stress relaxation, it is preferably 10°C to 45°C, more preferably 15°C to 40°C, and particularly preferably 20°C to 35°C.

The above component may include at least one of a miscible elastomer component (B1) that is miscible with the base resin (A), an immiscible elastomer component (B2) that is immiscible with the base resin (A), a block copolymer or a graft copolymer (B3) of polypropylene and polyethylene, and a block copolymer (B4) of polyethylene and polyethylene butylene.

In this case, when the sealant layer 16 contains the above additive (B) in addition to the base resin, stress relaxation properties can be effectively imparted to the sealant layer 16 to thereby provide the packaging material 10 with further improved scratch resistance.

The miscible elastomer component (B 1) means a component whose dispersed phase size dispersed in the base resin (A) is less than 500 nm when melt-mixed with the base resin (A).

Examples of the miscible elastomer component (B 1) include a polyolefin-based elastomer component. The polyolefin-based elastomer component is an elastomer component having a structure derived from an olefin. Examples of the polyolefin-based component include a polypropylene-based elastomer component. The polypropylene-based elastomer component is an elastomer having a structure derived from propylene. Specifically, the polypropylene-based elastomer component includes a copolymer of propylene and an α-olefin. Examples of the α-olefin include 1-butene, 1-pentene, 1-hexene, 1-octene, 4-methyl-1-pentene, and the like. The copolymer may include a random copolymer, a block copolymer, and the like.

The immiscible elastomer component (B2) means a component whose dispersed phase size dispersed in the base resin (A) is 500 nm or greater and less than 500 µm when melt-mixed with the base resin (A).

Examples of the immiscible elastomer component (B2) include a polyolefin-based elastomer component. The polyolefin-based elastomer component is an elastomer component having a structure derived from an olefin. Examples of the polyolefin-based elastomer component include a polyethylene-based elastomer component, a polybutene-based elastomer component and a polymethylpentene-based elastomer component.

The polyethylene-based elastomer component is an elastomer component having a structure derived from ethylene. The polybutene-based component is an elastomer component having a structure derived from butene. The polymethylpentene-based component is an elastomer component having a structure derived from methylpentene.

From the perspective of stress relaxation, the polyolefin-based elastomer component is preferably a polyethylene-based elastomer component.

The polyethylene-based elastomer component is preferably a copolymer of ethylene and α-olefin. Examples of the α-olefin include 1-butene, 1-pentene, 1-hexene, 1-octene, 4-methyl-1-pentene, and the like. The copolymer may include a random copolymer, a block copolymer, and the like.

The content of the ethylene-derived structure in the polyethylene-based elastomer component may be 60 mass% or greater, preferably 70 mass% or greater, more preferably 80 mass% or greater, and even more preferably 90 mass% or greater relative to the total amount of the polyethylene-based component.

The content of the polyolefin-based elastomer component in the immiscible elastomer component (B2) may be 60 mass% or greater, preferably 70 mass% or greater, more preferably 80 mass% or greater, and even more preferably 90 mass% or greater relative to the total amount of the component (B1).

The above component may include a polyethylene-based elastomer component as the immiscible elastomer component (B2), the block copolymer (B3) of polypropylene and polyethylene, or the block copolymer (B4) of polyethylene and polyethylene butylene.

When the additive (B) contains the above component, stress relaxation properties are effectively imparted to the sealant layer 16, and the dispersibility of the additive (B) is further improved. This results in further improvement in scratch resistance of the packaging material 10.

The mass ratio of the immiscible elastomer component (B2) to the block copolymer (B3) of polypropylene and polyethylene or the block copolymer (B4) of polyethylene and polyethylene butylene may be 0.1 or greater and less than 20, preferably 0.3 to 10, and more preferably 0.4 to 5.

The content of the additive (B) in the sealant layer 16 may be 2.5 mass% or greater. This further improves the scratch resistance of the heat-sealed packaging material 10. The content of the additive (B) in the sealant layer 16 is preferably 5 mass% or greater, and more preferably 10 mass% or greater.

The content of the additive (B) in the sealant layer 16 of 2.5 mass% or greater further improves the scratch resistance of the packaging material 10.

The content of the additive (B) in the sealant layer 16 may be less than 50 mass%. This further improves the scratch resistance of the heat-sealing of the packaging material 10. The content of the additive (B) in the sealant layer 16 is preferably 30 mass% or less, and more preferably 20 mass% or less.

The content of the additive (B) in the sealant layer 16 of less than 50 mass% can impart appropriate hardness to the sealant layer 16.

The total content of the base resin (A) and the additive (B) in the sealant layer 16 may be 70 mass% or greater, preferably 80 mass% or greater, and more preferably 90 mass% or greater.

The ratio of the base resin (A) to the total mass of the base resin (A) and the additive (B) may be, for example, 70 mass% or greater, preferably 80 mass% or greater, and more preferably 90 mass% or greater, and may be 93 mass% or less, preferably 95 mass% or less, and more preferably 97 mass% or less.

The sealant layer 16 may contain, in addition to the above-mentioned base resin (A) and additive (B), other additive components if necessary, such as slip agents, anti-blocking agents, antioxidants, photostabilizers, crystal nucleating agents and flame retardants.

The content of these additive components is preferably 5 mass% or less when the total mass of the sealant layer 16 is 100 mass%.

From the perspective of improving the scratch resistance of the packaging material 10, the ratio of the thickness of the sealant layer 16 to the thickness of the adhesive resin layer 15 (thickness of the sealant layer 16 / thickness of the adhesive resin layer 15) is preferably 1 or greater, preferably 1.1 or greater, and particularly preferably 1.5 or greater.

From the perspective of improving the scratch resistance of the packaging material 10, the ratio of the thickness of the sealant layer 16 to the thickness of the adhesive resin layer 15 (thickness of the sealant layer 16 / thickness of the adhesive resin layer 15) is preferably 10 or less, and more preferably 3 or less.

The total thickness of the sealant layer 16 and the adhesive resin layer 15 may be 15 µm to 300 µm, preferably 25 µm to 150 µm, and more preferably 50 µm to 100 µm from the viewpoint of sealing properties and water vapor barrier properties.

### <Adhesive Resin Layer>

The adhesive resin layer 15 is a layer that bonds the sealant layer 16 to the barrier layer 13, and contains an adhesive resin.

The oxygen transmission rate of the adhesive resin layer 15 at 100°C is not specifically limited, but from the perspective of further improving the scratch resistance of the packaging material 10, it is preferably 1.0×10⁻¹⁵ to 1.0×10⁻¹³ [(mol·m)/(m²·s·Pa)] as with the sealant layer 16.

Further, the oxygen transmission rate of the adhesive resin layer 15 at 100°C is preferably 7.0×10⁻¹⁵ to 5.0× 10⁻¹⁴ [(mol·m)/(m²·s·Pa)], and more preferably 9.0×10⁻¹⁵ to 3.0×10⁻¹⁴ [(mol·m)/(m²·s·Pa)].

The crystallization temperature of the adhesive resin layer 15 is not specifically limited, but is preferably 100°C to 120°C.

In this case, the packaging material 10 can be sufficiently hard, and the scratch resistance of the packaging material 10 is further improved compared to when the crystallization temperature of the polypropulene-based resin is outside the above range.

From the perspective of further improving the scratch resistance of the packaging material 10, the crystallization temperature of the polypropylene-based resin is preferably 102°C to 120°C, and more preferably 105°C to 115°C.

The adhesive resin layer 15 is not specifically limited as long as it contains a resin that bonds the sealant layer 16 to the barrier layer 13, and examples of such resins include acid-modified polyolefin resin. **In** this case, the adhesion between the barrier layer 13 and the sealant layer 16 is likely to be improved.

The acid-modified polyolefin resin may be a polyolefin resin modified with at least one selected from the group consisting of maleic anhydride, carboxylic acid, sulfonic acid, and derivatives thereof. The acid-modified polyolefin resin may be, for example, a graft copolymer, a block copolymer or a random copolymer. From the viewpoint of adhesion to the barrier layer 13, the acid-modified polyolefin resin is preferably a polyolefin resin graft-modified with maleic anhydride.

The adhesive resin layer 15 may contain, if necessary, various miscible and immiscible elastomers, various additives such as flame retardants, slip agents, anti-blocking agents, antioxidants, photostabilizers, crystal nucleating agents and tackifiers.

A packaging material including the adhesive resin layer 15 and the sealant layer 16, such as the packaging material 10, may be formed by preparing resin compositions for forming each layer and laminating them by the T-die method or blown film extrusion, or by forming one layer and then extruding and laminating another layer thereon, or by preparing layers by the T-die method or blown film extrusion and then bonding the layers together via an adhesive. From the viewpoint of interface adhesion, adhesives containing acid-modified polypropylene and curing agent (e.g., isocyanate) can be used as the adhesive.

The resins in the adhesive resin layer 15 and the sealant layer 16 can be analyzed by known analytical methods, such as IR, NMR, various mass analyses, X-ray analysis, Raman spectroscopy, GPC, DSC and DMA.

Although a preferred embodiment of the power storage device packaging material of the present embodiment has been described in detail, the present disclosure is not limited to the above specific embodiment.

For example, Fig. 1 illustrates the packaging material having the anticorrosion treatment layers 14a and 14b on respective sides of the barrier layer 13. However, the packaging material may include only one of the anticorrosion treatment layers 14a and 14b, or may not necessarily include the anticorrosion treatment layers 14a and 14b.

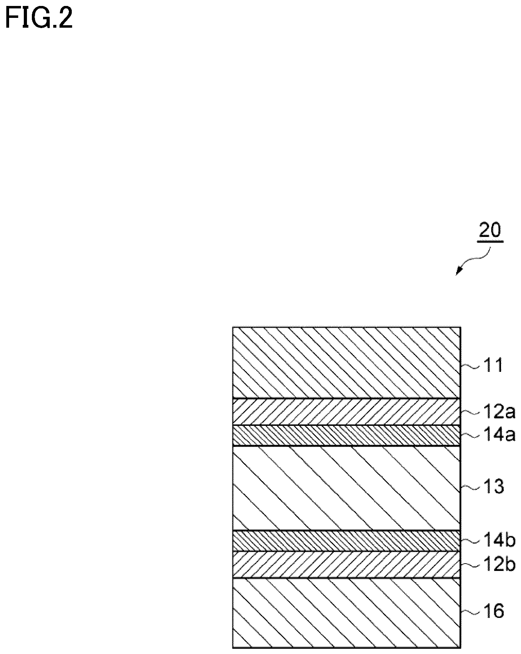

Fig. 1 illustrates an example in which the barrier layer 13 and the sealant layer 16 are laminated using the adhesive resin layer 15. However, the barrier layer 13 and the sealant layer 16 may be laminated using a second adhesive layer 12b, as in a power storage device packaging material 20 shown in Fig. 2.

### <Second Adhesive Layer>

The second adhesive layer 12b will be described below.

The second adhesive layer 12b bonds the barrier layer 13 to the sealant layer 16. A general purpose adhesive for bonding the barrier layer 13 to the sealant layer 16 can be used as the second adhesive layer 12b.

When the second anticorrosion treatment layer 14b is provided on the barrier layer 13 and the anticorrosion treatment layer 14b includes a layer containing at least one polymer selected from the group consisting of the cationic polymers and the anionic polymers described above, the second adhesive layer 12b preferably contains a compound (hereinafter, also referred to as a "reactive compound") having reactivity with the above-mentioned polymer contained in the second anticorrosion treatment layer 14b.

For example, if the second anticorrosion treatment layer 14b contains a cationic polymer, the second adhesive layer 12b preferably contains a compound having reactivity with the cationic polymer.

If the second anticorrosion treatment layer 14b contains an anionic polymer, the second adhesive layer 12b preferably contains a compound having reactivity with the anionic polymer.

Further, if the second anticorrosion treatment layer 14b contains both a cationic polymer and an anionic polymer, the second adhesive layer 12b preferably contains a compound having reactivity with the cationic polymer and a compound having reactivity with the anionic polymer. However, the second adhesive layer 12b may not necessarily contain the above two types of compounds, but may contain a compound having reactivity with both the cationic polymer and the anionic polymer. The term "having reactivity" as described herein means forming a covalent bond with a cationic polymer or an anionic polymer. The second adhesive layer 12b may further contain an acid-modified polyolefin resin.

The compound having reactivity with the cationic polymer may be at least one compound selected from the group consisting of a polyfunctional isocyanate compound, a glycidyl compound, a compound having a carboxy group, and a compound having an oxazoline group.

Of these compounds, a polyfunctional isocyanate compound is preferred from the perspective of having high reactivity with a cationic polymer and being readily formed into a crosslinked structure.

The compound having reactivity with the anionic polymer may be at least one compound selected from the group consisting of a glycidyl compound and a compound having an oxazoline group.

Of these compounds, a glycidyl compound is preferred from the perspective of having high reactivity with an anionic polymer.

When the second adhesive layer 12b contains an acid-modified polyolefin resin, the reactive compound is preferred to also have reactivity with the acidic group in the acid-modified polyolefin resin (i.e., form a covalent bond with the acidic group).

This further enhances adhesion to the second anticorrosion treatment layer 14b. In addition, the acid-modified polyolefin resin is permitted to have a crosslinked structure to further improve solvent resistance of the packaging material 20.

The content of the reactive compound is preferably 1 to 10 equivalents relative to the acidic group in the acid-modified polyolefin resin.

When the content of the reactive compound is 1 or more equivalents, the reactive compound sufficiently reacts with the acidic group in the acid-modified polyolefin resin. When the content of the reactive compound exceeds 10 equivalents, sufficient saturation is reached as a crosslinking reaction with the acid-modified polyolefin resin, and therefore unreacted substances may remain and thus various performances may deteriorate. Therefore, the content of the reactive compound may be preferably 5 to 20 parts by mass (solid content ratio) relative to 100 parts by mass of the acid-modified polyolefin resin, for example.

The acid-modified polyolefin resin is obtained by introducing an acidic group into a polyolefin resin. Examples of the acidic group include a carboxy group, a sulfonic acid group, an acid anhydride group, and the like. A maleic anhydride group and a (meth)acrylic acid group are particularly preferred. The acid-modified polyolefin resin may be, for example, the same resin as a modified polyolefin resin used for the sealant layer 16.

Various additives such as flame retardants, slip agents, anti-blocking agents, antioxidants, photostabilizers and tackifiers may be added to the second adhesive layer 12b.

From the perspective of suppressing deterioration in heat-sealing strength associated with a corrosive gas such as hydrogen sulfide or an electrolyte and the perspective of further suppressing deterioration in insulation properties, the second adhesive layer 12b may contain, for example, an acid-modified polyolefin and at least one curing agent selected from the group consisting of a polyfunctional isocyanate compound, a glycidyl compound, a compound having a carboxy group, a compound having an oxazoline group and a carbodiimide compound.

Examples of the carbodiimide compound include N,N'-di-o-tolylcarbodiimide, N,N'-diphenylcarbodiimide, N,N'-di-2,6-dimethylphenylcarbodiimide, N,N'-bis(2,6-diisopropylphenyl) carbodiimide, N,N'-dioctyldecylcarbodiimide, N-tolyl-N'-cyclohexylcarbodiimide, N,N'-di-2,2-di-t-butylphenylcarbodiimide, N-triyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-di-cyclohexylcarbodiimide and N,N'-di-p-tolylcarbodiimide.

Examples of the adhesive used for forming the second adhesive layer 12b include a polyurethane-based adhesive obtained by adding polyester polyol containing hydrogenated dimer fatty acid and diol to polyisocyanate. Examples of the adhesive include a polyurethane resin prepared by reacting a main resin such as a polyester polyol, polyether polyol, acrylic polyol or carbonate polyol with a bifunctional or higher functional isocyanate compound, and an epoxy resin prepared by reacting a main resin having an epoxy group with an amine compound. These are preferred from the viewpoint of heat resistance.

The thickness of the second adhesive layer 12b is not specifically limited, but from the perspective of obtaining a desired adhesive strength, processability and the like, the thickness is preferably 1 µm to 10 µm, and more preferably 2 µm to 7 µm.

### [Method of Producing Packaging Material]

Next, an example of a method of producing the packaging material 10 shown in Fig. 1 will be described. It should be noted that the method of producing the packaging material 10 should not be limited to the methods described below.

The method of producing the packaging material 10 of the present embodiment includes a step of providing the anticorrosion treatment layers 14a and 14b on respective sides of the barrier layer 13, a step of bonding the substrate layer 11 to the barrier layer 13 using the first adhesive layer 12a, a step of preparing a laminate by further laminating the adhesive resin layer 15 and the sealant layer 16 on the side of the barrier layer 13 that faces the anticorrosion treatment layer 14b, and, if necessary, a step of aging the resulting laminate.

### (Step of Laminating Anticorrosion Treatment Layer on Barrier Layer)

**In** this step, the anticorrosion treatment layers 14a and 14b are formed on the barrier layer 13. As described above, the method may include subjecting the barrier layer 13 to degreasing treatment, hydrothermal modification treatment, anodic oxidation treatment or chemical conversion treatment, applying a coating agent having an anticorrosion performance to the barrier layer 13, and the like.

If the anticorrosion treatment layers 14a and 14b are multilayers, for example, a coating liquid (coating agent) that serves as a lower layer-side (barrier layer 13-side) anticorrosion treatment layer may be applied to the barrier layer 13, followed by baking to form a first layer, and then, a coating liquid (coating agent) that serves as an upper layer-side anticorrosion treatment layer may be applied to the first layer, followed by baking to form a second layer.

The degreasing treatment may be performed by spraying or immersion. The hydrothermal conversion treatment and the anodic oxidation treatment may be performed by immersion. The chemical conversion treatment may be selected from among immersion, spraying and coating depending on the type of chemical conversion treatment.

Various methods such as gravure coating, reverse coating, roll coating and bar coating may be used as the method of applying the coating agent having an anticorrosion performance.

As described above, the various treatments may be applied to either side or both sides of the barrier layer 13 (e.g., metal foil), but in the case of a single-side treatment, the treatment is preferably applied to the surface on which the sealant layer 16 is to be laminated. If desired, the above-mentioned treatment may be applied to the surface of the substrate layer 11.

The amounts of the coating agents for forming the first and second layers are preferably 0.005 g/m² to 0.200 g/m², and more preferably 0.010 g/m² to 0.100 g/m².

If dry curing is necessary, dry curing can be performed at a temperature (base material temperature) ranging from 60°C to 300°C depending on the drying conditions of the anticorrosion treatment layers 14a and 14b used. The base material temperature refers to the temperature of the barrier layer 13 (e.g., metal foil).

### (Step of Bonding Substrate Layer to Barrier Layer)

In this step, the barrier layer 13 provided with the anticorrosion treatment layers 14a and 14b on respective sides is bonded to the substrate layer 11 via the first adhesive layer 12a. The substrate layer 11 is bonded to the side of the barrier layer 13 that faces the anticorrosion treatment layer 14a.

The barrier layer 13 provided with the anticorrosion treatment layers 14a and 14b is bonded to the substrate layer 11 using the material constituting the first adhesive layer 12a described above by a bonding method such as dry lamination, non-solvent lamination or wet lamination.

The dry coating weight of the first adhesive layer 12a is preferably in the range of 1 g/m² to 10 g/m², and more preferably 2 g/m² to 7 g/m².

### (Step of Laminating Adhesive Resin Layer and Sealant Layer)

In the step of laminating the adhesive resin layer 15 and the sealant layer 16, the adhesive resin layer 15 and the sealant layer 16 are formed on the side of the barrier layer 13 that faces the anticorrosion treatment layer 14b.

The lamination method includes sandwich-laminating the adhesive resin layer 15 together with the sealant layer 16 using an extrusion laminator.

Further, the adhesive resin layer 15 and the sealant layer 16 can also be laminated by tandem lamination or co-extrusion by which the adhesive resin layer 15 and the sealant layer 16 are extruded.

When forming the adhesive resin layer 15 and the sealant layer 16, for example, each component may be formulated to meet the configurations of the adhesive resin layer 15 and the sealant layer 16 described above.

The adhesive resin layer 15 is formed using an adhesive resin layer-forming resin composition containing the components of the adhesive resin layer 15 described above.

The sealant layer 16 is formed using a sealant layer-forming resin composition containing the components of the sealant layer 16 described above. The sealant layer 16 is formed so that the oxygen transmission rate at 100°C is 1.0×10⁻¹⁵ to 1.0×10⁻¹³ [(mol·m)/(m²·s·Pa)]. This can be achieved by, for example, appropriately combining the types of the base resin (A) and the additive (B) contained in the sealant layer 16, appropriately selecting the contents of the base resin (A) and the additive (B), and adjusting the crystallization temperature, melting temperature, MFR, and the like of the sealant layer 16.

According to the step of laminating the adhesive resin layer 15 and the sealant layer 16, a laminate is obtained, as shown in Fig. 1, in which the substrate layer 11 / first adhesive layer 12a / first anticorrosion treatment layer 14a / barrier layer 13 / second anticorrosion treatment layer 14b / adhesive resin layer 15 / sealant layer 16 are laminated in this order.

When laminating the adhesive resin layer 15, materials that are dry-blended so as to have the composition of the material formulation mentioned above may be directly laminated using an extrusion laminator. Alternatively, when laminating the adhesive resin layer 15, granules obtained in advance by melt-blending materials using a melt kneading device, such as a single-screw extruder, twin-screw extruder or Brabender mixer, may be laminated using an extrusion laminator.

When laminating the sealant layer 16, materials obtained by dry-blending the components of the sealant layer-forming resin composition may be directly laminated using an extrusion laminator. Alternatively, when laminating the adhesive resin layer 15 and the sealant layer 16, granules obtained in advance by melt-blending materials using a melt kneading device, such as a single-screw extruder, twin-screw extruder or Brabender mixer, may be used to laminate the adhesive resin layer 15 and the sealant layer 16 by tandem lamination or co-extrusion using an extrusion laminator.

Moreover, when laminating the adhesive resin layer 15 and sealant layer 16, the sealant layer 16 may be formed as a cast film in advance using a sealant layer-forming resin composition, and the sealant layer 16 may be laminated by sandwich-lamination together with an adhesive resin.

The formation rate (processing rate) of the adhesive resin layer 15 and the sealant layer 16 may be set to 80 m/min or more from the viewpoint of productivity.

### (Step of Aging)

In the aging step, the laminate is aged (cured). Aging of the laminate can promote interlayer adhesion of the substrate layer 11 / first adhesive layer 12a / first anticorrosion treatment layer 14a / barrier layer 13, and interlayer adhesion of the barrier layer 13 / second anticorrosion treatment layer 14b / second adhesive layer 12b / sealant layer 16.

The aging temperature may be 80°C or higher, preferably 100°C or higher, and more preferably 120°C or higher, and may be 140°C or lower, preferably 150°C or lower, and more preferably 160°C or lower.

The aging time may be 1 hour or more, preferably 2 hours or more, and more preferably 3 hours or more, and may be 24 hours or less, preferably 48 hours or less, and more preferably 72 hours or less.

Thus, the packaging material 10 of the present embodiment as shown in Fig. 1 can be produced.

Next, an example of a method of producing the packaging material 20 shown in Fig. 2 will be described. The method of producing the packaging material 20 should not be limited to the methods described below.

The method of producing the packaging material 20 of the present embodiment includes a step of providing the anticorrosion treatment layers 14a and 14b on respective sides of the barrier layer 13, a step of bonding the substrate layer 11 to the barrier layer 13 using the first adhesive layer 12a, a step of preparing a laminate by bonding the sealant layer 16 to the side of the barrier layer 13 that faces the anticorrosion treatment layer 14b via the second adhesive layer 12b, and, if necessary, a step of aging the resulting laminate.

The steps up to the step of bonding the substrate layer 11 to the barrier layer 13 using the first adhesive layer 12a can be performed in the same manner as in the method of producing the packaging material 10. The step of aging the resulting laminate can be performed in the same manner as in the method of producing the packaging material 10.

### (Step of Laminating Second Adhesive Layer and Sealant Layer)

In the step of laminating the second adhesive layer 12b and the sealant layer 16, the sealant layer 16 is bonded to the side of the barrier layer 13 that faces the anticorrosion treatment layer 14b via the second adhesive layer 12b to form a laminate.

The bonding method may be wet processing, dry lamination, or the like.

If wet processing is used, a solution or a dispersion of the adhesive constituting the second adhesive layer 12b is applied to the anticorrosion treatment layer 14b, and the solvent is evaporated at a predetermined temperature, followed by drying, which may be further followed by baking, if necessary, to thereby form a film.

Then, the sealant layer 16 is laminated to thereby produce the packaging material 20.

The coating method includes various coating methods. A preferred dry coating weight of the second adhesive layer 12b is the same as that of the first adhesive layer 12a.

In this case, the sealant layer 16 can be produced, for example, using a sealant layer-forming resin composition containing the base resin (A) and the additive (B) described above by using a melt extrusion molding machine. The processing rate of the melt extrusion molding machine may be set to 80 m/min or more from the viewpoint of productivity.

Although the power storage device packaging material of the present disclosure can be used, for example, as a packaging material for power storage devices, such as secondary batteries such as a lithium-ion battery, a nickel-hydrogen battery and a lead storage battery, and electrochemical capacitors such as an electric double layer capacitor, it can be particularly suitably used as a packaging material for power storage devices formed of a solid-state battery.

Since the power storage device packaging material described above can have excellent scratch resistance, irregularities are less likely to be formed on the surface of the sealant layer. Accordingly, when the power storage device packaging material is used as a packaging material for a solid-state battery having a power storage element and the power storage element is subjected to pressure via the packaging material, the presence of areas of high pressure and areas of low pressure on the pressurized surface of the power storage element is suppressed, and pressurization on the pressurized surface of the power storage element can be uniform. As a result, the solid-state battery can be efficiently operated.

### [Power Storage Device]

Next, an embodiment of the power storage device of the present disclosure will be described.

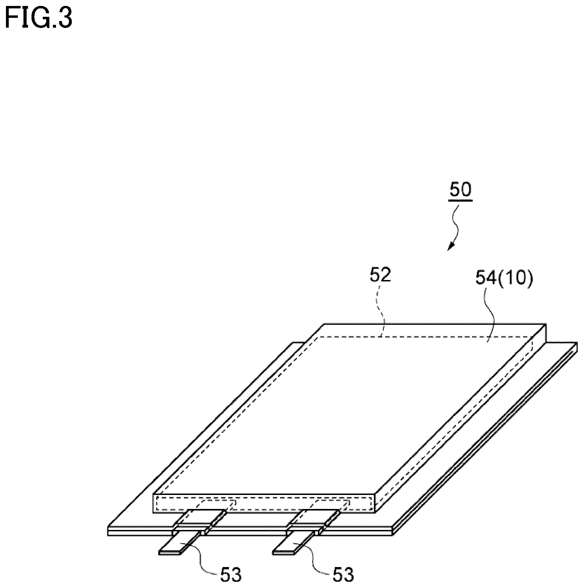

Fig. 3 is a perspective view illustrating a power storage device according to an embodiment of the present disclosure. As shown in Fig. 3, a solid-state battery 50 as a power storage device includes a power storage element 52, two metal terminals (current extraction terminals) 53 for extracting current externally from the power storage element 52, and a packaging bag 54 that hermetically accommodates the power storage element 52.

The packaging bag 54 includes the packaging material 10 according to the present embodiment described above, and is used as a container for accommodating the power storage element 52. In the packaging material 10, the substrate layer 11 is the outermost layer and the sealant layer 16 is the innermost layer. The packaging bag 54 has a configuration in which a single packaging material 10 is folded in half and heat-sealed at the peripheral portion, or two packaging materials 10 are overlapped with each other and heat-sealed at the peripheral portion, with the substrate layer 11 being on the outside of the solid-state battery 50 and the sealant layer 16 being on the inside of the solid-state battery 50, such that the power storage element 52 is contained inside the packaging material 10.

The metal terminals 53 are sandwiched and held by the packaging bag 54 with the sealant layer 16 on the inside. The metal terminals 53 may be sandwiched and held by the packaging bag 54 via a tab sealant. The metal terminals 53 are a part of a current collector extending out from the packaging material 10, and made of a metal foil such as a copper foil or an aluminum foil.

The power storage element 52 has a pair of electrodes and a solid electrolyte sandwiched between the pair of electrodes. On of the pair of electrodes is a positive electrode and the other is a negative electrode. Examples of the solid electrolyte include a sulfide-based solid electrolyte and an oxide-based solid electrolyte.

Since the solid-state battery 50 enables the packaging material 10 with excellent scratch resistance, irregularities are less likely to be formed on the surface of the sealant layer 16. Accordingly, when the packaging material 10 is used as the packaging material 10 for the solid-state battery 50 having the power storage element 52 and the power storage element 52 is subjected to pressure via the packaging material 10, the presence of areas of high pressure and areas of low pressure on the pressurized surface of the power storage element 52 is suppressed, and pressurization on the pressurized surface of the power storage element 52 can be uniform. Therefore, the solid-state battery 50 can improve the uniformity of the resistance at the interface between the electrode and the solid electrolyte in the power storage element 52. As a result, the solid-state battery 50 can be efficiently operated.

In the solid-state battery 50, the packaging bag 54 may include the packaging material 20 instead of the packaging material 10.

Further, it is also possible to use, as the power storage device, secondary batteries such as lithium-ion batteries, nickel hydride batteries and lead batteries, electrochemical capacitors such as electric double layer capacitors, and semi-solid-state batteries, instead of the solid-state battery 50.

### Examples

The present disclosure will be described below in more detail by way of examples. However, the present disclosure should not be limited to the following examples.

### [Materials Used]

Materials used as the substrate layer, the adhesive for forming the first adhesive layer, the adhesive for forming the second adhesive layer, the first anticorrosion treatment layer-forming material, the second anticorrosion treatment layer-forming material, the barrier layer, the adhesive resin layer and the sealant layer are as follows.

### <Substrate Layer>

PET: Polyethylene terephthalate film with corona treatment on one side (thickness 25 µm, melting temperature: 260°C)

### <Adhesive for Forming First Adhesive Layer (Mass per Unit Area of 4.0 g/m²)>

An adhesive (first adhesive) obtained by blending polyester polyol (manufactured by Showa Denko Materials Co., Ltd., product name: TESLAC 2505-63, hydroxyl group value: 7 to 11 mgKOH/g) and isocyanurate of isophorone diisocyanate (manufactured by Mitsui Chemicals, Inc., product name: TAKENATE 600) at an NCO/OH ratio of 20.0, and diluting it with ethyl acetate to a solid content of 26 mass%

### <Adhesive for Forming Second Adhesive Layer (Mass per Unit Area of 3.0 g/m²)>

An adhesive (second adhesive) obtained by formulating 10 parts by mass (solid content ratio) of a polyisocyanate compound having an isocyanurate structure per 100 parts by mass of an acid-modified polyolefin resin dissolved in toluene

### <First Anticorrosion Treatment Layer-Forming Material and Second Anticorrosion Treatment Layer-Forming Material>

The first anticorrosion treatment layer-forming material (substrate layer-side) and the second anticorrosion treatment layer-forming material (sealant layer-side) were (CL-1) and (CL-2) below.

### (CL-1): Sodium polyphosphate stabilized cerium oxide sol adjusted to a solid concentration of 10 mass% by using distilled water as a solvent

The sodium polyphosphate stabilized cerium oxide sol was obtained by formulating 10 parts by mass of Na salt of phosphoric acid per 100 parts by mass of cerium oxide.

### (CL-2): Composition adjusted to a solid concentration of 5 mass% by using distilled water as a solvent

In the above composition, the ratio "polyallylamine (manufactured by Nitto Boseki Co., Ltd.)" : "polyglycerol polyglycidyl ether (manufactured by Nagase ChemteX Corporation)" was 90:10 (mass ratio).

### <Barrier Layer (40 µm Thickness)>

### AL: Annealed and degreased soft aluminum foil (8079 Material manufactured by Toyo Aluminum K.K.)

### <Adhesive Resin Layer>

### Homopolypropylene modified with maleic anhydride

### (Oxygen transmission rate at 100°C: 1.8×10⁻¹⁴ [(mol·m)/(m²·s·Pa)], crystallization temperature: 120°C, melting temperature: 162°C)

### <Sealant Layer>

The base resin (A), the additive (B) and a film used for the sealant layer are shown in Table 1. In Table 1 below, "PP" refers to "polypropylene," and "PE" refers to "polyethylene."

**[Table 1]**

| | No. | Material | Crystallization temperature [°C] | Melting temperature [°C] | MFR [g/10min] |
|---|---|---|---|---|---|
| | a1 | Homo PP | 110 | 165 | 25 |
| | a2 | Homo PP | 110 | 165 | 3 |
| | a3 | Block PP | 110 | 165 | 25 |
| | a4 | Block PP | 110 | 165 | 3 |
| Base resin (A) | a5 | Block PP | 130 | 169 | 25 |
| | a6 | Block PP | 130 | 169 | 3 |
| | a7 | Block PP | 110 | 165 | 45 |
| | a8 | Block PP | 110 | 165 | 0.5 |
| | a9 | Random PP | 95 | 140 | 24 |
| | a10 | Random PP | 95 | 140 | 3 |
| Additive (B) | b1 | PP-butene copolymer : miscible elastomer (B1) | 55 | 70 | 7 |
| | b2-1 | PE-butene copolymer: immiscible elastomer (B2) | 60 | 75 | 6 |
| | b2-2 | PE-octene copolymer: immiscible elastomer (B2) | 70 | 95 | 5 |
| | b2-3 | PE-butene copolymer: immiscible elastomer (B2) | 45 | 48 | 6 |
| | b3-1 | PE·PP block copolymer (B3) | 80 | 100 | 7 |
| | b3-2 | PE·PP block copolymer (B3) | 92 | 125 | 7 |
| | b4 | PE·polyethylene butylene block copolymer (B4) | 65 | 100 | 3 |
| Film | c1 | PET film | 200 | 250 | - |

### [Production of Packaging Material]

### (Example 1)

First, the first and second anticorrosion treatment layers were provided on the barrier layer through the following procedure.

That is, (CL-1) was applied to both surfaces of the barrier layer by micro gravure coating at a dry coating weight of 70 mg/m², followed by baking at 200°C in a drying unit. Next, (CL-2) was applied to the obtained layer by micro gravure coating at a dry coating weight of 20 mg/m² to thereby produce composite layers of (CL-1) and (CL-2) as first and second anticorrosion treatment layers. The composite layers developed an anticorrosion performance by compounding two materials (CL-1) and (CL-2).

Next, the first anticorrosion treatment layer on the barrier layer provided with the first anticorrosion treatment layer and the second anticorrosion treatment layer was dry-laminated on the substrate layer using the first adhesive for forming the first adhesive layer to thereby obtain a first laminate (substrate layer / first adhesive layer / first anticorrosion treatment layer / barrier layer / second anticorrosion treatment layer). Specifically, the first adhesive was applied to the side of the barrier layer that faces the first anticorrosion treatment layer at a cured thickness of 5 µm, followed by drying at 80°C for 1 minute, and the surface was then laminated on the substrate layer, followed by aging at 80°C for 120 hours to thereby obtain a first laminate.

Next, the first laminate was set on the unwinding section of an extrusion laminator. An adhesive resin layer and a sealant layer were laminated in this order on the second anticorrosion treatment layer of the first laminate by co-extrusion from a T-die under processing conditions of 270°C at 80 m/min to thereby obtain a packaging material (laminate of substrate layer / first adhesive layer / first anticorrosion treatment layer / barrier layer / second anticorrosion treatment layer / adhesive resin layer / sealant layer). The thicknesses of the adhesive resin layer and the sealant layer were 25 µm and 55 µm, respectively.

The sealant layer was produced using a sealant layer-forming resin composition, which was prepared in advance by dry-blending the base resin (A) and the additive (B) shown in Table 2 in the content ratio shown in Table 2.

### (Examples 2 to 16 and Comparative Examples 1 and 2)

Packaging materials were prepared in the same manner as in Example 1, except that the oxygen transmission rate and composition of the sealant layer were set as shown in Tables 2 to 5.

### (Example 17)

A first laminate (substrate layer / first adhesive layer / first anticorrosion treatment layer / barrier layer / second anticorrosion treatment layer) was obtained in the same manner as in Example 1.

Next, a sealant layer having the oxygen transmission rate and composition shown in Table 5 was bonded to the second anticorrosion treatment layer of the first laminate by dry lamination using a second adhesive for forming a second adhesive layer.

For lamination of the first laminate and the sealant layer, the second adhesive was applied to the second anticorrosion treatment layer at a cured thickness of 3 µm, followed by drying at 80°C for 1 minute, and the surface was then laminated on the sealant layer, followed by aging at 120°C for 3 hours.

Thus, a packaging material (laminate of the substrate layer / first adhesive layer / first anticorrosion treatment layer / barrier layer / second anticorrosion treatment layer / second adhesive layer / sealant layer) was produced.

### (Comparative Example 3)

A first laminate (substrate layer / first adhesive layer / first anticorrosion treatment layer / barrier layer / second anticorrosion treatment layer) was obtained in the same manner as in Example 1.

Next, a PET film shown in Table 5 was bonded as a sealant layer to the second anticorrosion treatment layer of the first laminate by dry lamination using a second adhesive for forming a second adhesive layer.

For lamination of the first laminate and the sealant layer, an adhesive for forming the second adhesive layer was applied to the second anticorrosion treatment layer at a cured thickness of 3 µm, followed by drying at 80°C for 1 minute, and the surface was then laminated on the sealant layer, followed by aging at 120°C for 3 hours.

Thus, a packaging material (substrate layer / first adhesive layer / first anticorrosion treatment layer / barrier layer / second anticorrosion treatment layer / second adhesive layer / sealant layer) was produced.

### [Measurement Method]

### <Oxygen Transmission Rate>

The oxygen transmission rate of the sealant layer was measured as follows.

First, a sealant layer-forming resin composition was heated and melt at 200°C to prepare an 80 µm-thick measurement sheet.

Next, a differential pressure gas permeability tester was prepared. The differential pressure gas permeability tester used was a device including a first gas tube and a second gas tube provided with a valve and a pressure sensor and a ceramic electric tubular furnace having a heater (model: ARF-50K, manufactured by Asahi Rika Co., Ltd.). The oxygen transmission rate of the measurement sheet was measured by a differential pressure method using the differential pressure gas permeability tester. Specifically, the measurement sheet was placed between the end faces of the first gas tube and the second gas tube, and kept at 100°C in the ceramic electric tubular furnace, and oxygen gas (purity: 99.7% or higher) was supplied to the first gas tube on one side of the measurement sheet so that the pressure difference between the first gas tube and the second gas tube was 0.1MPa. The oxygen transmission rate was determined by measuring the change over time in the pressure of the oxygen gas in the second gas tube that permeated the measurement sheet. Tables 2 to 5 show the results.

### <Crystallization Temperature and Melting Temperature>

The crystallization temperature and the melting temperature of the base resin (A), the additive (B) and the film were measured as follows.

First, 5 mg of a sample made of the same material as the base resin (A), the additive (B) or the film was prepared. Next, the sample was placed in a measurement vessel and set in a differential scanning calorimeter (DSC), and the crystallization temperature and the melting temperature were measured according to JIS K 7121-1987.

In the measurement, the temperature was increased from 23°C to 210°C at a rate of 10°C/min and then decreased from 210°C to 23°C at a rate of 10°C/min twice.

The peak top temperature of the crystallization peak during the first operation was taken as the crystallization temperature, and the peak top temperature of the melting peak during the second operation was taken as the melting temperature. Table 1 shows the results.

The melting temperature was measured in the second operation after the crystallinity was reset, since the first operation was affected by the crystalline state at the time of measurement.

### <MFR>

The MFR (melt flow rate) of the base resin (A), the additive (B) and the film was measured as follows.

First, a sample made of the same material as the base resin (A), the additive (B) or the film was prepared.

The MFR (unit: g/10 min) of the sample was measured under conditions of 230°C and 2.16 kg load according to JIS K 7210. Table 1 shows the results.

### [Evaluation of Scratch Resistance]

The packaging materials obtained in Examples 1 to 17 and comparative examples 1 to 3 were subjected to a pencil hardness test. Specifically, the pencil hardness was measured by checking for scratching on the sealant layer of the packaging material using a pencil hardness tester specified in JIS K 5600. Based on the pencil hardness results, scratch resistance was evaluated according to the following evaluation criteria. Tables 2 to 5 show the results.

### [Evaluation Criteria]

S: Pencil hardness is 5H or higher
A: Pencil hardness is 3H or higher and less than 5H
B: Pencil hardness is 2H or higher and less than 3H
C: Pencil hardness is H or higher and less than 2H
D: Pencil hardness is less than H

**[Table 2]**

| No. | Bonding method of sealant layer to first laminate | Sealant layer | | | | | | | | | | | Evaluation result |
|---|---|---|---|---|---|---|---|---|---|---|---|---|---|
| | | Oxygen ransmission ate [(mol·m) /(m²·s·Pa)] | Composition | | | | | | | | | | |
| | | | Base resin (A) | | Additive (B) | | | | | | | | Scratch resistance |
| | | | | | Miscible elastomer component (B1) | | Immiscible elastomer component (B2) | | PE-PP block or graft copolymer (B3) | | PE-ethylene butylene block copolymer (B4) | | |
| | | | Type | Content (mass%) | Type | Content (mass%) | Type | Content (mass%) | Type | Content (mass%) | Type | Content (mass%) | |
| Ex. 1 | Heat lamination | 2.5 × 10⁻¹⁵ | a1 | 50 | - | - | - | - | - | - | - | - | C |
| | | | a2 | 50 | | | | | | | | | |
| Ex. 2 | Heat lamination | 5.2 × 10⁻¹⁵ | a3 | 50 | - | - | - | - | - | - | - | - | B |
| | | | a4 | 50 | | | | | | | | | |
| Ex. 3 | Heat lamination | 2.1 × 10⁻¹⁵ | a5 | 50 | - | - | - | - | - | - | - | - | C |
| | | | a6 | 50 | | | | | | | | | |
| Ex. 4 | Heat lamination | 3.9 × 10⁻¹⁵ | a7 | 50 | - | - | - | - | - | - | - | - | C |
| | | | a4 | 50 | | | | | | | | | |
| Ex. 5 | Heat lamination | 8.0 × 10⁻¹⁵ | a3 | 50 | - | - | - | - | - | - | - | - | C |
| | | | a8 | 50 | | | | | | | | | |

**[Table 3]**

| No. | Bonding method of sealant layer to first laminate | Sealant layer | | | | | | | | | | | Evaluation result |
|---|---|---|---|---|---|---|---|---|---|---|---|---|---|
| | | Oxygen ransmission ate [(mol·m) /(m²·s·Pa)] | Composition | | | | | | | | | | |
| | | | Base resin (A) | | Additive (B) | | | | | | | | Scratch resistance |
| | | | | | Miscible elastomer component (B1) | | Immiscible elastomer component (B2) | | PE-PP block or graft copolymer (B3) | | PE-ethylene butylene block copolymer (B4) | | |
| | | | Type | Content (mass%) | Type | Content (mass%) | Type | Content (mass%) | Type | Content (mass%) | Type | Content (mass%) | |
| Ex. 6 | Heat lamination | 3.1 × 10⁻¹⁴ | a3 | 45 | b1 | 10 | - | - | - | - | - | - | A |
| | | | a4 | 45 | | | | | | | | | |
| Ex. 7 | Heat lamination | 7.5 × 10⁻¹⁵ | a3 | 45 | - | - | b2-1 | 10 | - | - | - | - | A |
| | | | a4 | 45 | | | | | | | | | |
| Ex. 8 | Heat lamination | 7.7 × 10⁻¹⁵ | a3 | 45 | - | - | b2-2 | 10 | - | - | - | - | A |
| | | | a4 | 45 | | | | | | | | | |
| Ex. 9 | Heat lamination | 5.2 × 10⁻¹⁴ | a3 | 45 | - | - | b2-3 | 10 | - | - | - | - | B |
| | | | a4 | 45 | | | | | | | | | |
| Ex. 10 | Heat lamination | 7.2 × 10⁻¹⁵ | a3 | 45 | - | - | - | - | b3-1 | 10 | - | - | A |
| | | | a4 | 45 | | | | | | | | | |

**[Table 4]**

| No. | Bonding method of sealant layer to first laminate | Sealant layer | | | | | | | | | | | Evaluation result |
|---|---|---|---|---|---|---|---|---|---|---|---|---|---|
| | | Oxygen ransmission ate [(mol·m) /(m²·s·Pa)] | Composition | | | | | | | | | | |
| | | | Base resin (A) | | Additive (B) | | | | | | | | Scratch resistance |
| | | | | | Miscible elastomer component (B1) | | Immiscible elastomer component (B2) | | PE-PP block or graft copolymer (B3) | | PE-ethylene butylene block copolymer (B4) | | |
| | | | Type | Content (mass%) | Type | Content (mass%) | Type | Content (mass%) | Type | Content (mass%) | Type | Content (mass%) | |
| Ex. 11 | Heat lamination | 6.7 × 10⁻¹⁵ | a3 | 45 | - | - | - | - | b3-2 | 10 | - | - | B |
| | | | a4 | 45 | | | | | | | | | |
| Ex. 12 | Heat lamination | 8.1 × 10⁻¹⁵ | a3 | 45 | - | - | - | - | | | b4 | 10 | A |
| | | | a4 | 45 | | | | | | | | | |
| Ex. 13 | Heat lamination | 9.3 × 10⁻¹⁵ | a3 | 45 | - | - | b2-1 | 5 | b3-1 | 5 | - | - | S |
| | | | a4 | 45 | | | | | | | | | |
| Ex. 14 | Heat lamination | 9.2 × 10⁻¹⁴ | a3 | 45 | - | - | b2-2 | 5 | b3-1 | 5 | - | - | S |
| | | | a4 | 45 | | | | | | | | | |
| Ex. 15 | Heat lamination | 1.3 × 10⁻¹⁴ | a3 | 45 | - | - | b2-1 | 10 | b3-1 | 10 | - | - | S |
| | | | a4 | 45 | | | | | | | | | |

**[Table 5]**

| No. | Bonding method of sealant layer to first laminate | Sealant layer | | | | | | | | | | | Evaluation result |
|---|---|---|---|---|---|---|---|---|---|---|---|---|---|
| | | Oxygen ransmission ate [(mol·m) /(m²·s·Pa)] | Composition | | | | | | | | | | |
| | | | Base resin (A) | | Additive (B) | | | | | | | | Scratch resistance |
| | | | | | Miscible elastomer component (B1) | | Immiscible elastomer component (B2) | | PE-PP block or graft copolymer (B3) | | PE-ethylene butylene block copolymer (B4) | | |
| | | | Type | Content (mass%) | Type | Content (mass%) | Type | Content (mass%) | Type | Content (mass%) | Type | Content (mass%) | |
| Ex. 16 | Heat lamination | 1.5 × 10⁻¹⁴ | a3 | 40 | - | - | b2-2 | 10 | b3-1 | 10 | - | - | S |
| | | | a4 | 40 | | | | | | | | | |
| Ex. 17 | Dry lamination | 1.3 × 10⁻¹⁴ | a3 | 40 | - | - | b2-2 | 10 | b3-1 | 10 | - | - | S |
| | | | a4 | 40 | | | | | | | | | |
| Comp. Ex. 1 | Heat lamination | 8.0 × 10⁻¹³ | a3 | 5 | - | - | - | - | - | - | b4 | 90 | D |
| | | | a4 | 5 | | | | | | | | | |
| Comp. Ex. 2 | Heat lamination | 1.5 × 10⁻¹³ | a9 | 45 | - | - | - | - | - | - | b4 | 10 | D |
| | | | a10 | 45 | | | | | | | | | |
| Comp. Ex. 3 | Dry lamination | 8.5 × 10⁻¹⁶ | c1: PET film | | | | | | | | | | D |

As seen from the results shown in Tables 2 to 5, all the packaging materials of Examples 1 to 17 were rated as "S," "A," "B" or "C" for the scratch resistance. On the other hand, all the packaging materials of Comparative Examples 1 to 3 were rated as "D" for the scratch resistance.

The above results indicate that the packaging material of the present disclosure can have excellent scratch resistance.

### [Reference Signs List]

10, 20 ... Packaging material
11 ... Substrate layer
13 ... Barrier layer
15 ... Adhesive resin layer
16 ... Sealant layer
50 ... Solid-state battery (power storage device)
52 ... Power storage element
54 ... Packaging bag

## Claims

1. A power storage device packaging material for a power storage device, comprising:
a substrate layer; a barrier layer; and a sealant layer in this order, wherein
the sealant layer has an oxygen transmission rate at 100°C of 1.0×10⁻¹⁵ to 1.0×10⁻¹³ [(mol·m)/(m²·s·Pa)].

2. The power storage device packaging material according to claim 1, wherein
the sealant layer contains a base resin (A) made of a polypropylene-based resin,
the polypropylene-based resin contains at least one of homo polypropylene and block polypropylene, and
the polypropylene-based resin has a crystallization temperature of 100°C to 120°C and a melting temperature of 155°C to 168°C.

3. The power storage device packaging material according to claim 1, wherein
the sealant layer contains a base resin (A) made of a polypropylene-based resin, and
the polypropylene-based resin contains a first polypropylene-based resin having an MFR of 15 g/10 min to 40 g/10 min and a second polypropylene-based resin having an MFR of 1 g/10 min to 10 g/10 min.

4. The power storage device packaging material according to claim 1, wherein
the sealant layer contains a base resin (A) made of a polypropylene-based resin and an additive (B),
the additive (B) contains a component having a crystallization temperature of 50°C to 90°C and a melting temperature of 50°C to 120°C, and
the component contains at least one of a miscible elastomer component (B1) that is miscible with the base resin (A), an immiscible elastomer component (B2) that is immiscible with the base resin, a block copolymer or a graft copolymer (B3) of polypropylene and polyethylene, and a block copolymer (B4) of polyethylene and polyethylene butylene.

5. The power storage device packaging material according to claim 4, wherein
the component contains the immiscible elastomer component (B2), the block copolymer (B3) of polypropylene and polyethylene, or the block copolymer (B4) of polyethylene and polyethylene butylene, and
the immiscible elastomer component (B2) is a polyethylene-based elastomer component.

6. The power storage device packaging material according to claim 4 or 5, wherein
a content of the additive (B) in the sealant layer is 2.5 mass% or greater.

7. The power storage device packaging material according to any one of claims 4 to 6, wherein
a content of the additive (B) in the sealant layer is less than 50 mass%.

8. The power storage device packaging material according to any one of claims 1 to 7, further comprising an adhesive resin layer that bonds the barrier layer to the sealant layer.

9. The power storage device packaging material according to claim 8, wherein
the adhesive resin layer has an oxygen transmission rate at 100°C of 1.0×10⁻¹⁵ to 1.0× 10⁻¹³ [(mol·m)/(m²·s·Pa)].

10. The power storage device packaging material according to claim 8 or 9, wherein
the adhesive resin layer contains an acid-modified polyolefin resin.

11. The power storage device packaging material according to any one of claims 1 to 10, wherein
the power storage device is a solid-state battery.

12. A power storage device comprising:
a power storage element; and
a packaging bag that accommodates the power storage element, wherein
the packaging bag has the packaging material according to any one of claims 1 to 10.

13. The power storage device according to claim 12, wherein
the power storage device is a solid-state battery.
